# EUROPEAN PATENT APPLICATION

(11) **EP 0 977 202 A1**
(43) Date of publication of application: **02.02.2000**
(21) Application number: 99202464.6
(22) Date of filing: 27.07.1999
(51) Int. Cl.: G11B 33/04

(54) **Tray for two compact discs, intended for installation in a standard jewel box**

(30) Priority: 27.07.1998 NL 1009748
(71) Applicant: Finest Industrial Co., Ltd., Chaiwan (HK)
(72) Inventor: Lau, Kwok Din, Chaiwan (HK)
(74) Representative: Ottevangers, Sietse Ulbe

(57) **Abstract**

A tray for two compact discs is provided on either side with means for clamping a compact disc thereon. The tray comprises a tray part and an anchor part which are hingedly connected to each other. The tray is intended for installation in a standard jewel box, with the anchor part forming the connection between the tray and the base part, while in the standard jewel box no special provisions are made for forming the connection between the tray and the jewel box.

## Description

This invention relates to a tray for two compact discs, which tray is provided on both sides with means for clamping a compact disc thereon. Such a tray is known, for instance, from GB-A-2,261,210, DE-A-4,210,826 and EP-A-0,492,421. These known trays are intended for installation in a case which has the dimensions of a standard "jewel box". A standard jewel box is a box for one compact disc, comprising a base part and a cover part, the base part comprising a bottom wall and four sidewalls, and the cover part comprising a cover wall and two sidewalls, while the sidewalls of the cover part, for forming two lips, extend slightly beyond the cover wall, the lips being each provided with a hinge projection each engaging in a circular hinge recess, associated with a corresponding hinge projection, in a sidewall of a base part, which circular hinge recesses are provided in two opposite sidewalls of the base part, adjacent to a third sidewall of the base part. In the standard jewel box, a tray is received which is provided on one side only with means for clamping a compact disc thereon. The tray of the standard jewel box maintains a fixed position relative to the base part during the use of the standard jewel box. Thus a stable connection between the base part and the tray can be accomplished. Although the base parts and tray parts of the compact

disc cases proposed in the above-mentioned patent publications are dimensionally equal to those of a standard jewel box, the further construction of these base parts and cover parts is different. In the proposal of GB-A-2,261,210, the base part is provided with additional recesses 52 which, together with projections 50, form a pivot joint between the tray and the base part. In DE-A-4,210,826, this is likewise the case. In the proposal of EP-A-0,492,421, the base part, on the side remote from the cover hinge, is provided with recesses 18 in which projections 19 of the tray engage. The device of the type described in the preamble of claim 1 is known from GB-A-2,316,061.

A great drawback of the known solutions is that special base parts must be manufactured to effect the connection between the tray and the base part. Accordingly, this requires special molds for the base part, which is experienced as cumbersome by most manufacturers of CD cases. The manufacturers have a strong preference for a standard base part, a standard cover part and a number of different trays that can be placed in the standard base part. It will be clear that for the standard base part and the standard cover part, the manufacturers prefer to use the base part and cover part of the standard jewel box already in use for many years now. As appears clearly from Fig. 11 of GB-A-2,316,061, the anchor portion 44 thereof is provided with projections 140, 160, which engage in recesses, provided in the base part especially for these projections, in the sidewalls 32, 34 of the base part. Although these recesses are not shown in the drawings, they are explicitly mentioned on page 11, second and third paragraphs, of the publication in question. It is these very recesses that form the special provisions in the base part that render the base part different from the standard base part of a jewel box.

To date, therefore, it is not possible to place a tray capable of holding two compact discs in the base part and the cover part of a standard jewel box.

Another important requirement imposed on a compact disc case is that it remain intact, even when the user drops the CD box. This is not the case in the proposals of the above-mentioned publications. In particular, this is a consequence of the fact that the connection between the tray and the base part must also have a hinge function. The connection is therefore formed by two projection/recess assemblies which are to have some clearance to allow a pivotal movement of the tray relative to the base part. As a result of this very clearance, the connection between the tray and the base part is not very secure, so that already upon a very slight impact load, the tray may become disengaged from the base part.

A disadvantage holding in particular for EP-A-0,492,421 is that when the tray is being pivoted outwards, the initially upper compact disc comes to be suspended freely above the ground or the tabletop. This entails the risk that the compact disc, when improperly clamped onto the clamping piece, falls on the ground or on the table and is thereby damaged.

The object of the invention is to provide a tray for two compact discs without the above-mentioned disadvantages.

To that end, the invention provides a tray for two compact discs, which tray is provided on either side with means for clamping a compact disc thereon, the tray comprising a tray part and an anchor part hingedly connected to each other, the tray being intended for installation in a standard "jewel box", which jewel box comprises a base part and a cover part, the base part comprising a bottom wall and four sidewalls, and the cover part comprising a cover wall and at least two sidewalls, while two opposite sidewalls of the cover part, for forming two lips, extend slightly beyond the cover wall, the lips being each provided with a hinge projection each engaging in a circular hinge recess, associated with a corresponding hinge projection, in a sidewall of the base part, which circular hinge recesses are provided in two opposite sidewalls of the base part, adjacent to a third sidewall of the base part, the anchor part forming the connection between the tray and the base part, without any special provisions being arranged in the standard jewel box for forming the connection between the tray and the base part. Owing to the tray comprising a tray part and an anchor part which are hingedly connected to each other, with the anchor part forming the connection between the tray and the base part, the anchor part can maintain a fixed position relative to the base part during use. The connection between the anchor part and the base part can therefore be dimensioned entirely with a view to the connecting function, since the hinge function has been resolved in a different way. As a result, it is possible to provide a firm clamped joint between the anchor part and the base part. Owing to the enablement of a firm clamped connection between the base part and the anchor part, no special provisions need to be made in the base part of the standard jewel box for forming the connection between the anchor part and the base part. The expression special provisions is here understood to mean additional recesses, projections and/or the like.

According to a further elaboration of the invention, to provide a very secure connection between the base part and the anchor part, the anchor part is provided with two projections, each arranged at two opposite free ends of the anchor part and positioned and dimensioned so as to engage in the circular hinge recesses referred to, the dimensions of the anchor part further being such that the anchor part is received with a clamped fit between the two opposite sidewalls in which the hinge recesses are provided, the anchor part further having no projections that need to be received in any recesses in the base part that are provided especially for that purpose. The hinge recesses have thus acquired a double function, that is, forming the hinge between the base part and the cover part, and forming a form-closed connection between the anchor part of the tray and the base part. As the anchor part is moreover received with a clamping fit between the two opposite sidewalls, an additional advantage is achieved in that the sidewalls upon being loaded cannot move towards each other, which might cause the cover part to become disengaged from the base part. The anchor part of the tray according to the invention therefore imparts an additional strengthening to the base part and cover part, known per se, of the standard jewel box. Owing to the anchor part further not having any projections that need to be received in recesses in the base part that are provided especially for that purpose, a base part of a standard jewel box can be used for installing the tray therein.

In practice, it has been found that the tray known from GB-A-2,316,061 sometimes disengages from the base part when the CD case falls on the ground from a certain height. Such disengagement occurs despite the fact that the known case has the additional projections 140, 160 referred to. To prevent this phenomenon, the tray is characterized, according to a further elaboration of the invention, in that two side edges of the tray part, which side edges extend perpendicularly to the imaginary hinge axis about which the tray part hinges on the anchor part, are each provided with a protrusion arranged to be fittingly received, in a closed position, in a recess located in the associated sidewall of the base part. As the protrusions, in a closed position of the CD case, are received with a proper fit in the recesses, already present anyway, of the base part of a standard jewel box, the engagement surface between the tray according to the invention and the base part of the standard jewel box is enlarged, so that the tray in a closed position finds more support in the base part of a standard jewel box, so that slipping of the tray from the base part when the CD case is dropped, no longer occurs, or is at least substantially prevented.

It will be clear that the invention also relates to a compact disc storage case of the standard jewel box type fitted with a tray according to the invention.

The invention further relates to a so-called multiple compact disc storage case comprising two base parts of the standard jewel box type, which base parts are each hingedly connected with an intermediate part provided on one or both sides with means for clamping a compact disc thereon, while in one or both base parts a tray according to the invention is received. The multiple compact disc storage case as such is known from European patent application EP-A-0,114,631. By accommodating trays according to the invention in this multiple compact disc storage case, known per se, the multiple compact disc case can be rendered suitable for accommodating three to six CDs.

The invention will be further explained on the basis of exemplary embodiments which will be clarified hereinafter with reference to the drawings.
Fig. 1 shows a base part, a cover part and a tray of a known standard jewel box;
Fig. 2 shows in perspective an exemplary embodiment of the CD case according to the invention, with the tray in a first position;
Fig. 3 shows a similar view to Fig. 2, with the tray part in a second position;
Fig. 4 shows a perspective view of the anchor part and the tray part in a detached position;

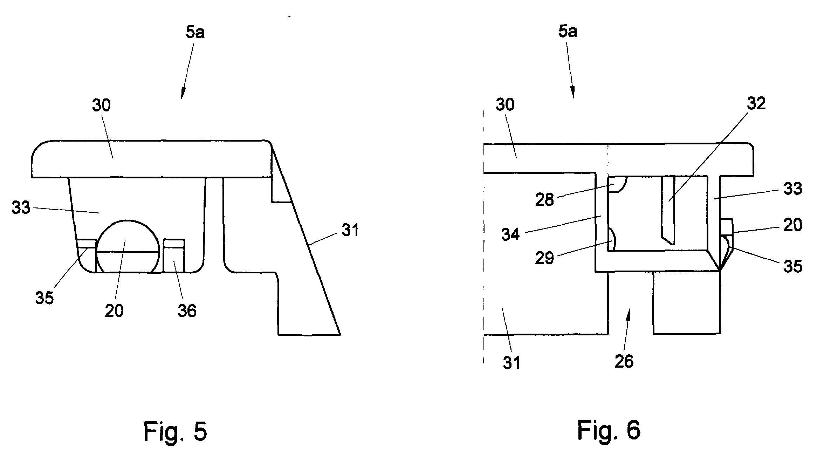

Fig. 5 shows an elevation viewed in the direction of arrow V in Fig. 4;
Fig. 6 shows an elevation of the anchor part viewed from the direction of arrow VI in Fig. 4;
Fig. 7 shows a top plan view of a second exemplary embodiment of the tray according to the invention; and
Fig. 8 shows a side elevation of the exemplary embodiment represented in Fig. 7.

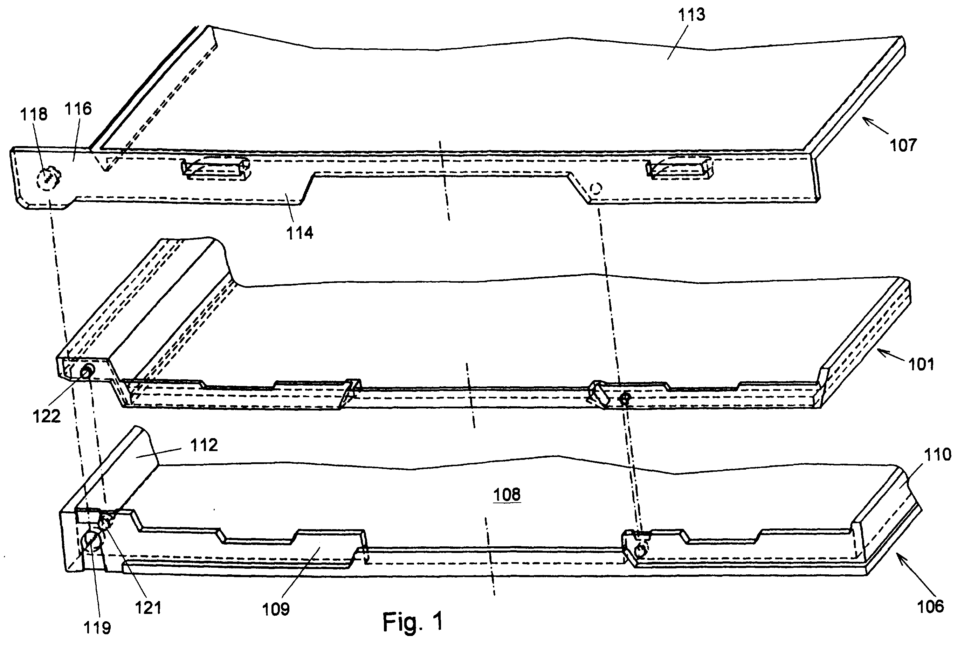

Fig. 1 shows a portion of the base part 106, the tray 101, and the cover part 107 of the compact disc case disclosed in DE-A-4,210,826. The base part 106 comprises a bottom wall 108 and four sidewalls 109, 110, 111, 112, of which the sidewall 111 is not shown. The cover part 107 comprises a cover wall 113 and at least two sidewalls 114, 115, of which the sidewall 115 is not shown. The opposite sidewalls 114, 115 extend slightly beyond the cover wall 113 for forming two lips 116, 117. The lips 116, 117 are each provided with a hinge projection 118, each engaging in a circular hinge recess 119, associated with a corresponding hinge projection 118, in a sidewall 109, 111 of the base part 106. The circular hinge recesses 119 are provided in two opposite sidewalls 109, 111 of the base part 106, adjacent to a third sidewall 112 of the base part 106. The base part of the known compact disc case is not equal to the base part of a standard jewel box in that the former has two additional recesses 121, intended for cooperation with a hinge projection 122 provided on the tray 101. In the known CD case, the connection between the tray 101 and the base part 106 is formed by the hinge 121, 122. This connection, of course, has some clearance, thereby enabling smooth pivoting of the tray 101 relative to the base part 106. It is precisely as a result of this clearance that the tray 101 can easily slip from the base part 106. The known CD case is therefore particularly sensitive.

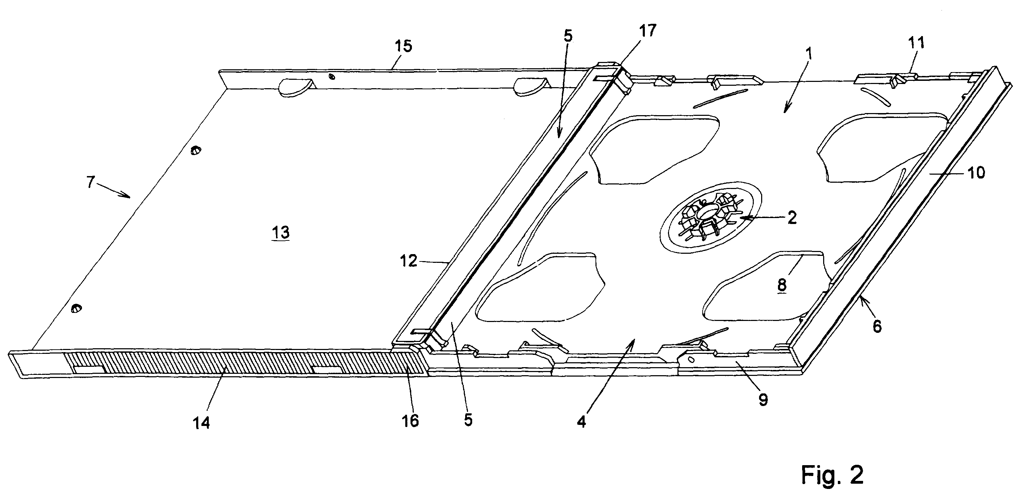

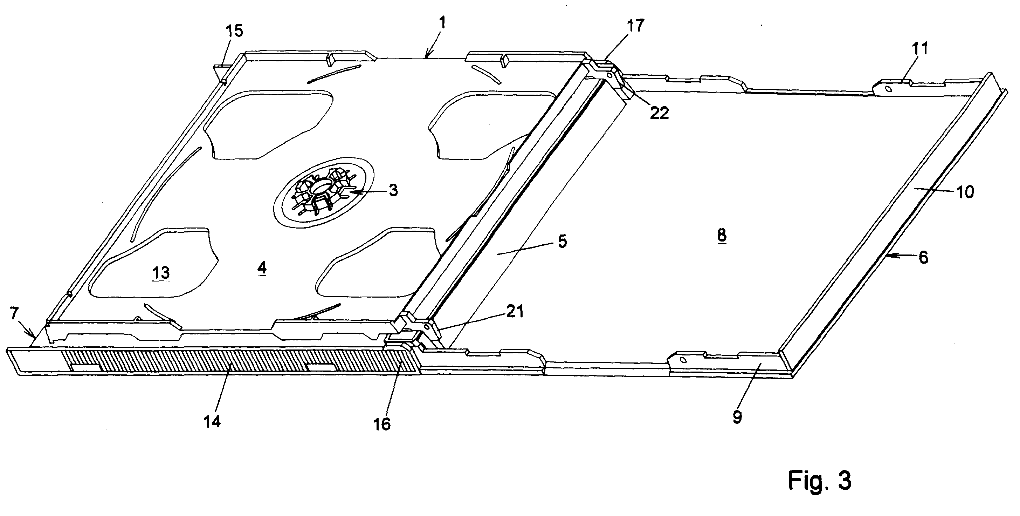

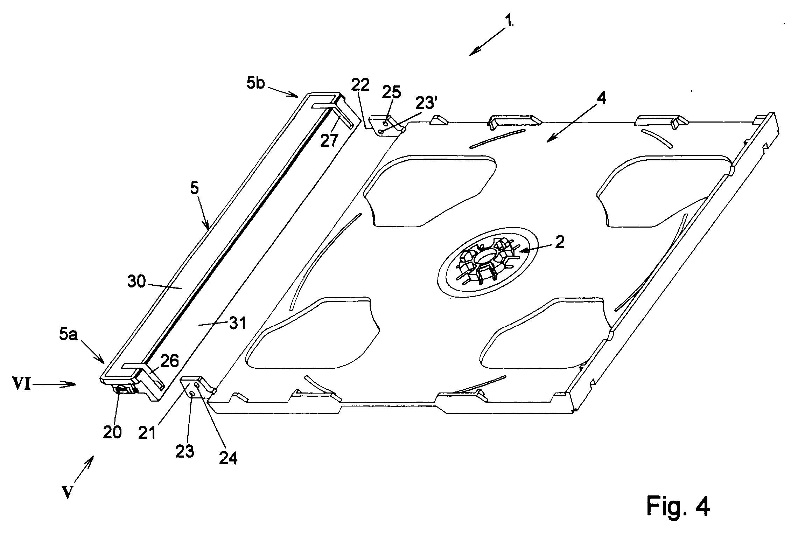

Figs. 2 and 3 show perspective views of an exemplary embodiment of a CD case according to the invention, the tray 1 being depicted in a first position in Fig. 2 and in a second position in Fig. 3. Fig. 4 shows another perspective view of the tray 1, with the tray part 4 detached from the anchor part 5.

The tray 1 is suitable for receiving two compact discs and to that end comprises on either side means 2, 3 for clamping a compact disc thereon. The design of the clamping pieces 2, 3 can be realized in a variety of ways and is not a part of the present invention. The tray 1 comprises a tray part 4 and an anchor part 5, which are hingedly connected to each other. The anchor part 5 in assembled condition is fixedly connected to the base part 6. The base part 6 comprises a bottom wall 8 and four sidewalls 9, 10, 11, 12. The cover part 7 comprises a cover wall 13 and two sidewalls 14, 15. The sidewalls 14, 15 extend slightly beyond the cover wall 13 for forming two lips 16, 17. The lips 16, 17, on the mutually facing sides thereof, are provided with a hinge projection, which is not visible but which is equal to the hinge projection 118 represented in Fig. 1. In the opposite sidewalls 9, 11 of the base part 6, adjacent the sidewall 12, hinge recesses are provided in which the hinge projections engage. These hinge recesses are not visible either in Figs. 2 and 3 but substantially correspond to the hinge recesses 119 of the known base part represented in Fig. 1.

As already mentioned hereinabove, the tray 1 comprises a tray part 4 and an anchor 5. The fixed connection of the anchor 5 to the base part 6 is effected by clamping and by two projections 20 provided at the two free ends 5a, 5b of the anchor part 5. The clamping of the anchor part 5 between the sidewalls 9, 11 of the base part 6 can be somewhat enhanced by run-on projections 35, 36, which may be arranged next to the two projections 20. The projections 20 are positioned and dimensioned so as to engage in the circular hinge recesses in the sidewalls 9, 11 of the base part 6. In addition to the clamped joint, the projections 20 further create a form-closed connection. The dimensions of the anchor part 5 are such that the anchor part 5 is received with a clamped fit between the two opposite sidewalls 9, 11 in which the hinge recesses are provided.

The tray 1 comprises two hinge arms 21, 22 on the tray part 4 and two hinge arm receiving slots 26, 27 on the anchor part 5. The hinge arms 21, 22 are each provided with a hinge loop 24, 25, each engaging a projection 28 provided in the anchor part 5. Further, the arms 21, 22 comprise two locking recesses 23, 23' which engage a slightly lower projection 29 in the anchor part 5 when the tray part 4 is in the position represented in Fig. 2. The recesses 23, 23' and the projection 29 are intended to prevent inadvertent pivoting of the tray part 4 when the CD case is being opened. The anchor part 5 comprises a top wall 30 and an inclined sidewall 31. The projection 20 and the clamping projections 35, 36 are provided on a vertical wall portion 33 which extends perpendicularly to the top wall 30 of the anchor part 5. The hinge projection 28 and the locking projection 29 are provided on a vertical wall portion 34, likewise extending perpendicularly to the top wall 30 of the anchor part 5. The hinge recesses 26, 27 extend both in the sidewall 31 and in the top wall 30 of the anchor part 5.

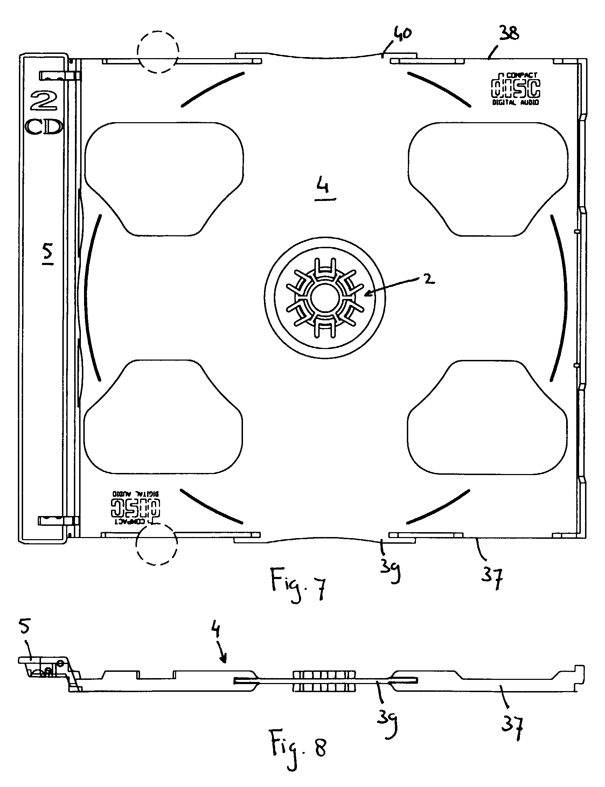

Figs. 7 and 8 show a second exemplary embodiment of a tray according to the invention. Of this exemplary embodiment, the two side edges 37, 38, which extend perpendicularly to the imaginary hinge axis around which the tray part 4 hinges about the anchor part 5, are each provided with a protrusion 39, 40 adapted to be fittingly received, in a closed position, in recesses 41, 42 (see Fig. 3), which are located in the sidewalls 9, 11 of the base part 6. As the protrusions 39, 40, in a closed position of the CD case, fall into the recesses 41, 42, the chance of the tray 1 becoming detached from the base part 6 upon impact loads is reduced to a minimum.

European patent EP-A-0,114,631 discloses a multiple compact disc storage case which comprises two base parts 6 each hingedly connected with an intermediate part optionally provided on one or both sides with means for clamping a compact disc thereon. It will be clear that the invention also relates to such a multiple compact disc storage case which is provided with trays 1 received in one or both base parts 6.

Essential is that the tray 1 is so constructed as to be receivable in a base part of a standard jewel box, without the base part having any special provision, such as, for instance, additional recesses or projections, for fixing the tray in the base part 6.

## Claims

1. A tray for two compact discs, which tray (1) is provided on both sides with means (2, 3) for clamping a compact disc thereon, the tray (1) comprising a tray part (4) and an anchor part (5) hingedly connected to each other, the tray (1) being intended for installation in a standard "jewel box", which jewel box comprises a base part (6) and a cover part (7), the base part (6) comprising a bottom wall (8) and four sidewalls (9, 10, 11, 12), and the cover part (7) comprising a cover wall (12) and at least two sidewalls (14, 15), while two opposite sidewalls (14, 15) of the cover part (7), for forming two lips (16, 17), extend slightly beyond the cover wall (13), the lips (16, 17) being each provided with a hinge projection each engaging in a circular hinge recess, associated with a corresponding hinge projection, in a sidewall (9, 11) of the base part (6), which circular hinge recesses are provided in two opposite sidewalls (9, 11) of the base part (6), adjacent to a third sidewall (12) of the base part (6), with the anchor part (5) forming the connection between the tray (1) and the base part (6), characterized in that in the standard jewel box no special provisions are made for forming the connection between the tray (1) and the base part (6).

2. A tray according to claim 1, characterized in that for forming the connection between the base part (6) and the anchor part (5), the anchor part (5) is provided with two projections (20) each provided at two opposite free ends (5a, 5b) of the anchor part (5) and positioned and dimensioned so as to engage in said circular hinge recesses (19), the dimensions of the anchor part (5) further being such that the anchor part (5) is received with a clamped fit between the two opposite sidewalls (9, 11) in which the hinge recesses are provided, the anchor part (5) further having no other projections that need to be received in recesses provided especially for that purpose in the base part.

3. A tray according to claim 1 or 2, characterized in that two side edges (37, 38) of the tray part (4), which side edges (37, 38) extend perpendicularly to the imaginary hinge axis around which the tray part (4) hinges about the anchor part (5), are each provided with a protrusion (39, 40) adapted to be fittingly received, in a closed position, in a recess (41, 42) located in the corresponding sidewall (9, 11) of the base part (6).

4. A compact disc storage case of the standard jewel box type, provided with a tray according to any one of claims 1-3.

5. A multiple compact disc storage case comprising two base parts (6) of a standard jewel box, which base parts are each hingedly connected with an intermediate part provided on one or both sides with means for clamping a compact disc thereon, while in one or both base parts (6) a tray (1) according to any one of claims 1-3 is received.
